# EUROPÄISCHE PATENTSCHRIFT

(11) **EP 1 319 562 B1**
(45) Veröffentlichungstag und Bekanntmachung des Hinweises auf die Patenterteilung: **14.09.2005**
(21) Anmeldenummer: 02026345.5
(22) Anmeldetag: 22.11.2002
(51) Int. Cl.: B60R 22/36

(54) **Sperrklinke**
Locking pawl
Cliquet de verrouillage

(30) Priorität: 13.12.2001 DE 20120219 U
(43) Veröffentlichungstag der Anmeldung: 18.06.2003
(73) Patentinhaber: TRW Automotive GmbH, 73553 Alfdorf (DE)
(72) Erfinder: Weller, Hermann-Karl, 73553 Alfdorf (DE)
(74) Vertreter: Sties, Jochen

(56) Entgegenhaltungen:
- FR-A- 2 476 491
- US-A- 4 059 242
- US-A- 4 461 434
- PATENT ABSTRACTS OF JAPAN vol. 1996, no. 05, 31. Mai 1996 (1996-05-31) & JP 08 020309 A (NIPPON SEIKO KK), 23. Januar 1996 (1996-01-23)

## Beschreibung

Die Erfindung betrifft eine Sperrklinke für einen Mechanismus zur Blockierung eines Gurtaufrollers eines Sicherheitsgurts.

Gurtaufroller dienen dazu, einem Fahrzeuginsassen Sicherheitsgurtband zur Verfügung zu stellen. Im Normalfall kann das Gurtband gegen den Widerstand eines Federelements von der Gurtspule abgezogen werden. Im blockierten Zustand ist ein Gurtbandabzug nicht möglich.

An einem derartigen Gurtaufroller, wie etwa aus dem deutschen Gebrauchsmuster 201 09 534 bekannt, ist mindestens eine Sperrklinke angeordnet, die in eine Sperrverzahnung an einem Rahmen des Gurtaufrollers eingesteuert werden können, um eine Gurtspule drehfest zu blockieren. Ein Mechanismus zur Blockierung des Gurtaufrollers erlaubt nun, die Gurtspule abhängig von den auf das Gurtband einwirkenden Kräften bzw. den auf das Fahrzeug einwirkenden Beschleunigungskräften zu blockieren. In beiden Fällen wird die Sperrklinke so verschwenkt, daß sie in die Sperrverzahnung am Rahmen des Gurtaufrollers einsteuert. Im Falle der gurtbandsensitiven Aktivierung des Blockiermechanismus bleibt eine als Trägheitsscheibe ausgebildete Kupplungsscheibe, die an der Gurtspule relativ zu dieser verdrehbar angeordnet ist, aufgrund ihrer Massenträgheit hinter der Drehung der Gurtspule zurück. An der Kupplungsscheibe ist ein Betätigungselement angeordnet, das ein Verschwenken der Sperrklinke veranlaßt, die so in die Sperrverzahnung einsteuert. Die Funktionsweise eines derartigen Mechanismus zur Blockierung eines Gurtaufrollers eines Sicherheitsgurts ist im oben genannten Gebrauchsmuster ausführlich beschrieben und soll hier deshalb nicht mehr weiter dargestellt werden.

Obwohl derartige Sperrklinken für Gurtaufroller in der Regel ihre Funktion sehr gut erfüllen, wird gewünscht, diese noch weiter zu verbessern, um beispielsweise die Geräuschentwicklung zu vermindern oder das Gewicht der Sperrklinke zu reduzieren.

Die Erfindung schafft eine Sperrklinke für einen Mechanismus zur Blockierung eines Gurtaufrollers eines Sicherheitsgurts, mit der die Geräuschentwicklung deutlich reduziert wird. Gemäß der Erfindung ist bei einer Sperrklinke der eingangs genannten Art vorgesehen, daß die Sperrklinke ein aus einem ersten Material bestehendes erstes Sperrklinkenelement, das den Gurtaufroller blockieren kann, und ein aus einem zweiten Material bestehendes zweites Sperrklinkenelement, das eine Bewegung der Sperrklinke steuern kann, umfaßt, wobei erstes und zweites Material nicht identisch sind. Das erste Sperrklinkenelement wirkt als lasttragendes Blockierelement, das zweite Sperrklinkenelement wirkt als Führungselement. Besonders vorteilhaft ist es, wenn das erste Sperrklinkenelement aus einem Metall und das zweite Sperrklinkenelement aus einem Kunststoff besteht. Dadurch wird erreicht, daß es an mehreren Punkten nicht mehr, wie ansonsten üblich, zu einem Kontakt von Metall mit Metall kommt, sondern daß Metall auf Kunststoff trifft, was die Geräuschentwicklung deutlich reduziert. Während die Verwendung einer Sperrklinke, die nur aus Metall besteht, eine aufwendige und teure Behandlung der Metalloberfläche erforderlich macht, um optimale Gleiteigenschaften zwischen dem Betätigungselement und der Sperrklinke zu erreichen, ist dies bei der erfindungsgemäßen Sperrklinke nicht mehr erforderlich, da das Betätigungselement mit dem zweiten Sperrklinkenelement aus Kunststoff zusammenwirken kann. Darüber hinaus vermindert sich auch das Gewicht der Sperrklinke deutlich.

In einer vorteilhaften Ausführungsform der Erfindung ist das erste Sperrklinkenelement aus der Gruppe der Stanz-, Sinter- und Kaltfließpressteile. Diese sind deutlich kostengünstiger herzustellen als die bisher verwendeten Sperrklinken.

In einer weiteren vorteilhaften Ausführungsform der Erfindung ist das zweite Sperrklinkenelement ein Kunststoffspritzteil ist, das das erste Sperrklinkenelement umschließt. Dies kann zum Beispiel durch einfaches Umspritzen des ersten Sperrklinkenelements geschehen, was eine besonders einfache und kostengünstige Herstellung der Sperrklinke ermöglicht.

Weitere vorteilhafte Ausgestaltungen der Erfindung ergeben sich aus den Unteransprüchen.

Die Erfindung wird nachfolgend unter Bezugnahme auf einige bevorzugte Ausführungsformen beschrieben, die in den beigefügten Zeichnungen dargestellt sind. In den Zeichnungen zeigen:
- Figur 1 einen Gurtaufroller mit einem Mechanismus zur Blockierung eines Gurtaufrollers in einer Teilansicht mit Ausbrüchen,
- Figur 2 eine perspektivische Ansicht einer ersten Ausführungsform der erfindungsgemäßen Sperrklinke,
- Figur 3 eine weitere perspektivische Ansicht der ersten Ausführungsform der erfindungsgemäßen Sperrklinke,
- Figur 4 eine perspektivische Ansicht der ersten Ausführungsform eines Elements der erfindungsgemäßen Sperrklinke,
- Figur 5 eine weitere perspektivische Ansicht der ersten Ausführungsform eines Elements der erfindungsgemäßen Sperrklinke,
- Figur 6 eine perspektivische Ansicht einer zweiten Ausführungsform der erfindungsgemäßen Sperrklinke,
- Figur 7 eine weitere perspektivische Ansicht der zweiten Ausführungsform der erfindungsgemäßen Sperrklinke,
- Figur 8 eine perspektivische Ansicht der zweiten Ausführungsform eines Elements der erfindungsgemäßen Sperrklinke, und
- Figur 9 eine perspektivische Ansicht der zweiten Ausführungsform eines weiteren Elements der erfindungsgemäßen Sperrklinke.

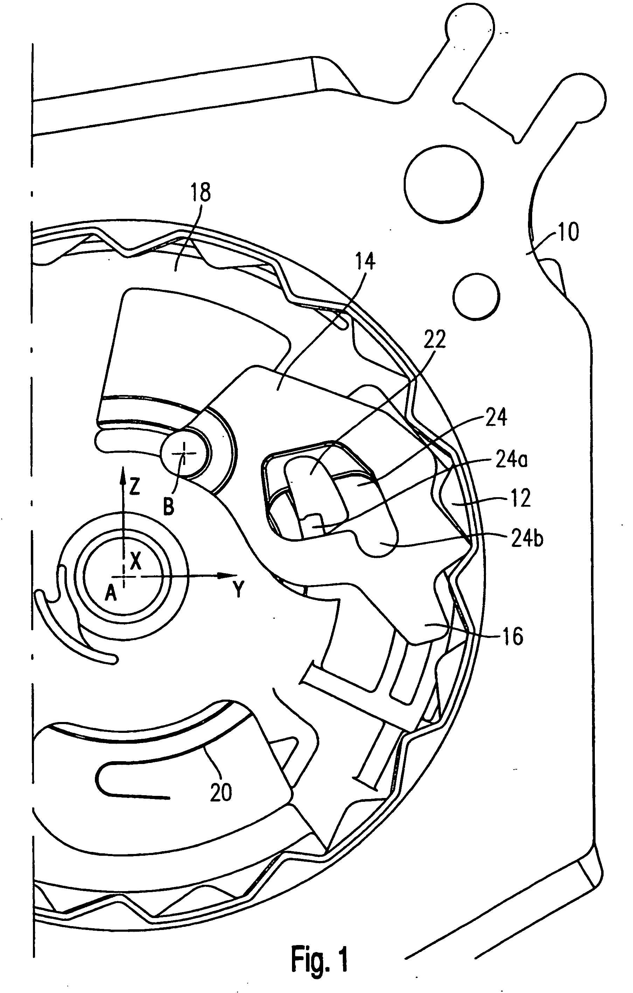

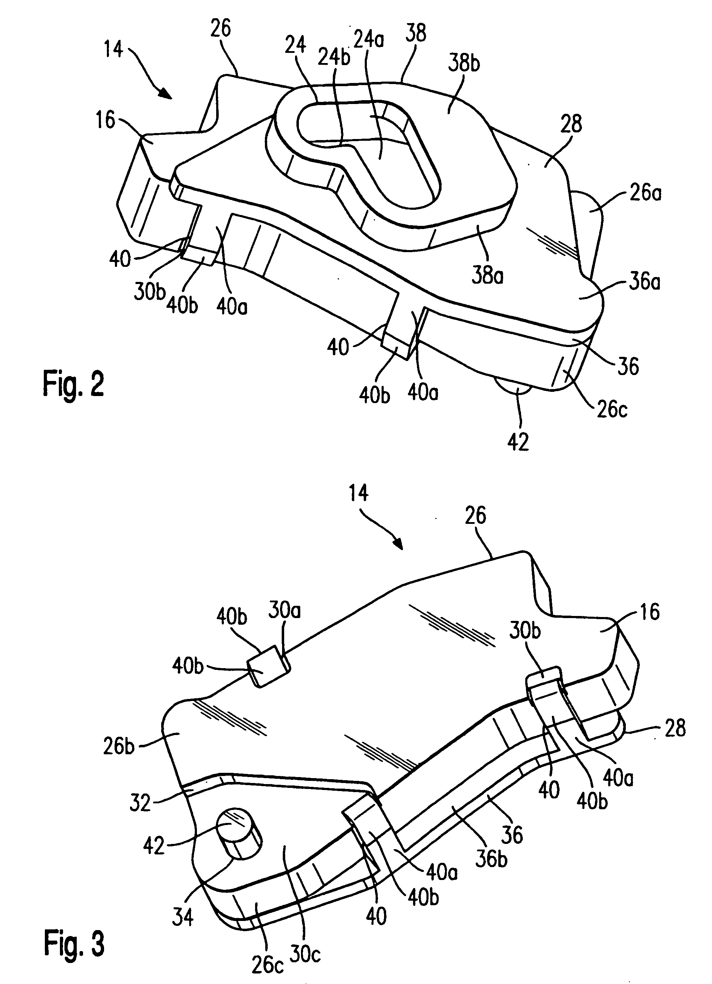

Der in Figur 1 gezeigte Gurtaufroller weist einen Rahmen 10 auf, in dem eine nicht dargestellte Gurtspule drehbar um eine Achse A gelagert ist. Im Rahmen 10 befindet sich eine kreisförmige Öffnung, die über den ganzen Umfang von einer Sperrverzahnung 12 berandet ist. Auf der Gurtspule ist eine hier schematisch gezeigte Sperrklinke 14 um eine Achse B schwenkbar gelagert. Die Sperrklinke weist mehrere Sperrzähne 16 auf und kann in die Sperrverzahnung 12 eingesteuert werden. Eine Kupplungsscheibe 18 ist koaxial mit der Gurtspule verbunden, so daß sie relativ zu dieser begrenzt verdrehbar ist. Die Grundposition der Kupplungsscheibe 18 gegenüber der Gurtspule wird durch eine Spiralfeder 20, die die Kupplungsscheibe vorspannt, festgelegt. Ein mit der Kupplungsscheibe fest verbundenes Betätigungselement 22 greift in eine Steuerkontur 24 ein, die sich in der Sperrklinke 14 befindet und aus zwei im wesentlichen rechtwinklig zueinander stehenden Aussparungen 24a und 24b aufgebaut ist. In den Figuren 2, 4 und 5 ist die Steuerkontur 24 vergrößert dargestellt.

In den Figuren 2 und 3 ist die Sperrklinke 14 im Detail gezeigt. Diese besteht aus einem ersten Sperrklinkenelement 26 mit dem Sperrzahn 16 und einem zweiten Sperrklinkenelement 28 mit der Steuerkontur 24.

Das erste Sperrklinkenelement 26 besteht aus Metall und hat eine erste und eine zweite Deckfläche 26a, 26b sowie einen Rand 26c. Auf der dem zweiten Sperrklinkenelement 28 abgewandten Fläche weist das erste Sperrklinkenelement 26 kleine Ausnehmungen 30a und 30b auf. Eine weitere Ausnehmung 30c erstreckt sich im bezüglich der Figur 3 gesamten linken unteren Bereich des ersten Sperrklinkenelements 26 auf der dem zweiten Sperrklinkenelement 28 abgewandten Seite und wird von einer Stufe 32 begrenzt. Im Bereich der Ausnehmung 30c weist das erste Sperrklinkenelement 26 ein Durchgangsloch 34 auf.

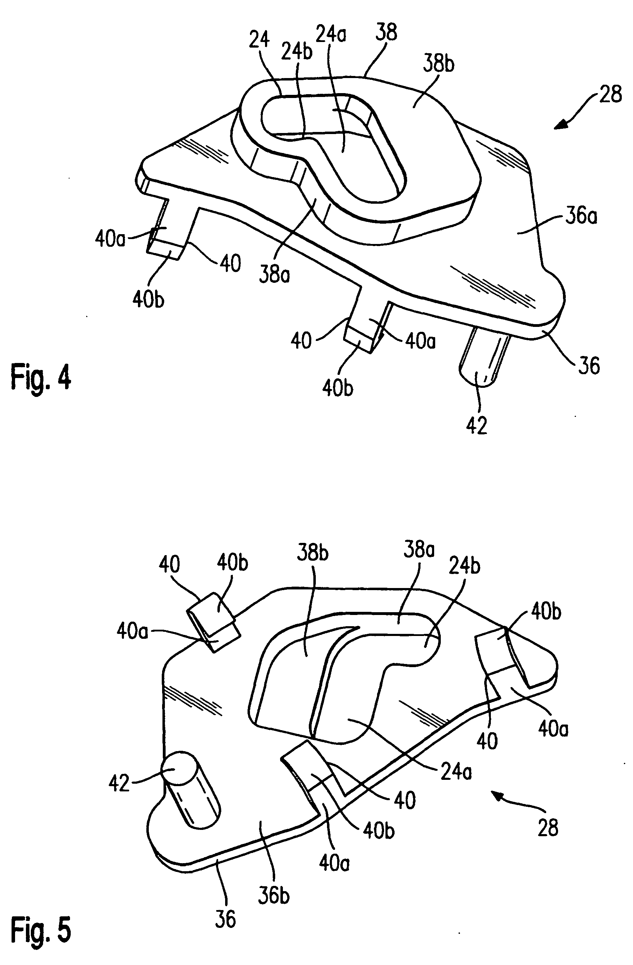

Das zweite Sperrklinkenelement 28 besteht aus Kunststoff und ist aus einer Grundplatte 36, einem Steuerkonturaufsatz 38, drei Hakenelementen 40 und einem Stift 42 aufgebaut (siehe auch Figuren 4 und 5). Die Grundplatte 36 weist eine erste Begrenzungsfläche 36a und eine zweite Begrenzungsfläche 36b auf, wobei die beiden Begrenzungsflächen zueinander planparallel sind. Bezüglich der Figuren 2 und 4 oberhalb der Grundplatte 36 befindet sich der Steuerkonturaufsatz 38, der aus einem Wandelement 38a und einem Deckenelement 38b zusammengesetzt ist, wie dies besonders gut in den Figuren 2 und 4 zu sehen ist. Das Wandelement 38a liegt senkrecht zur Grundplatte 36, das Deckenelement 38b parallel zur Grundplatte 36. Im Deckenelement 38b des Steuerkonturaufsatzes 38 ist die Steuerkontur 24 ausgespart. Die Hakenelemente 40 bestehen jeweils aus einem Fortsatz 40a, der im wesentlichen senkrecht von der Grundplatte 36 ausgeht, und einer Nase 40b, die am Ende des Fortsatzes 40a direkt mit diesem verbunden ist.

Das erste Sperrklinkenelement 26 und das zweite Sperrklinkenelement 28 werden in voneinander unabhängigen Arbeitsschritten hergestellt. Die beiden Sperrklinkenelemente 26, 28 werden dann sandwichartig zusammengefügt, indem das zweite Sperrklinkenelement 28 auf das erste Sperrklinkenelement 26 aufgeschnappt wird. Dazu müssen die Hakenelemente 40 bezüglich der Grundplatte 36 leicht nach außen gebogen werden, um über den Rand 26c des ersten Sperrklinkenelements 26 geschoben werden zu können. Der Stift 42 greift dabei gleichzeitig in das Durchgangsloch 34 ein, so daß er auf der von der Grundplatte 36 abgewandten Seite des ersten Sperrklinkenelements hervorsteht. Schließlich schnappen die Nasen 40b der Hakenelemente 40 in die entsprechenden Ausnehmungen 30a - 30c des ersten Sperrklinkenelements 26 ein. Durch die vierfache Sicherung der Hakenelemente 40 und des Stifts 42 in den Ausnehmungen 30 bzw. dem Durchgangsloch 34 wird erreicht, daß das zweite Sperrklinkenelement 28 nicht unbeabsichtigt vom ersten Sperrklinkenelement 26 abgezogen werden kann und daß das erste Sperrklinkenelement und das zweite Sperrklinkenelement gegen eine laterale Verschiebung gegeneinander gesichert sind. Dies ermöglicht eine einfache, dabei aber besonders sichere Verbindung der beiden Sperrklinkenelemente 26, 28.

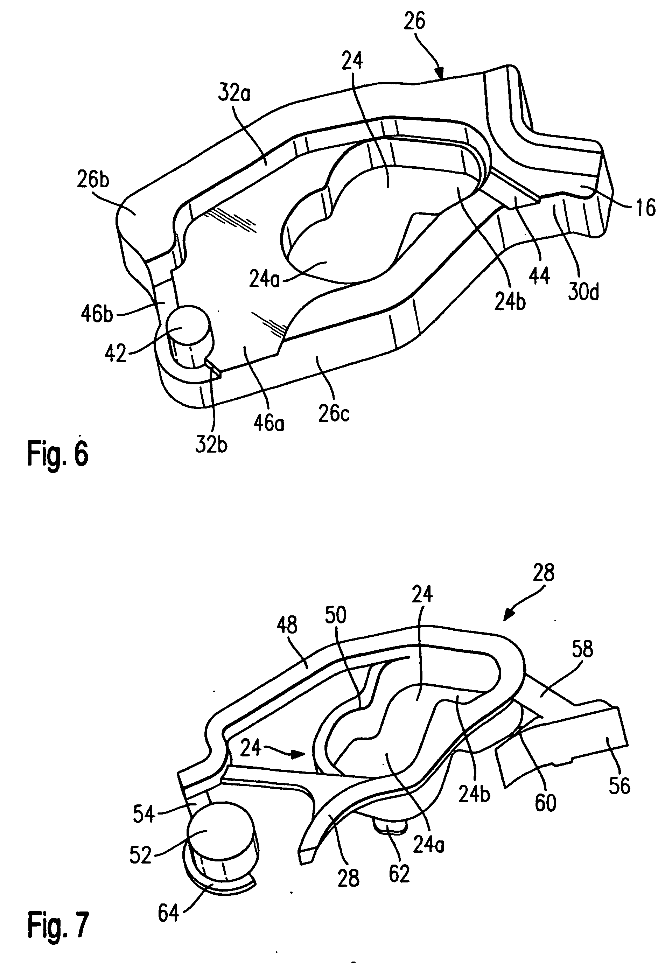

In den Figuren 6 bis 9 ist eine zweite Ausführungsform der Sperrklinke dargestellt, bei der das zweite Sperrklinkenelement 28 ein Kunststoffspritzteil ist, das das erste Sperrklinkenelement 26 aus Metall umschließt.

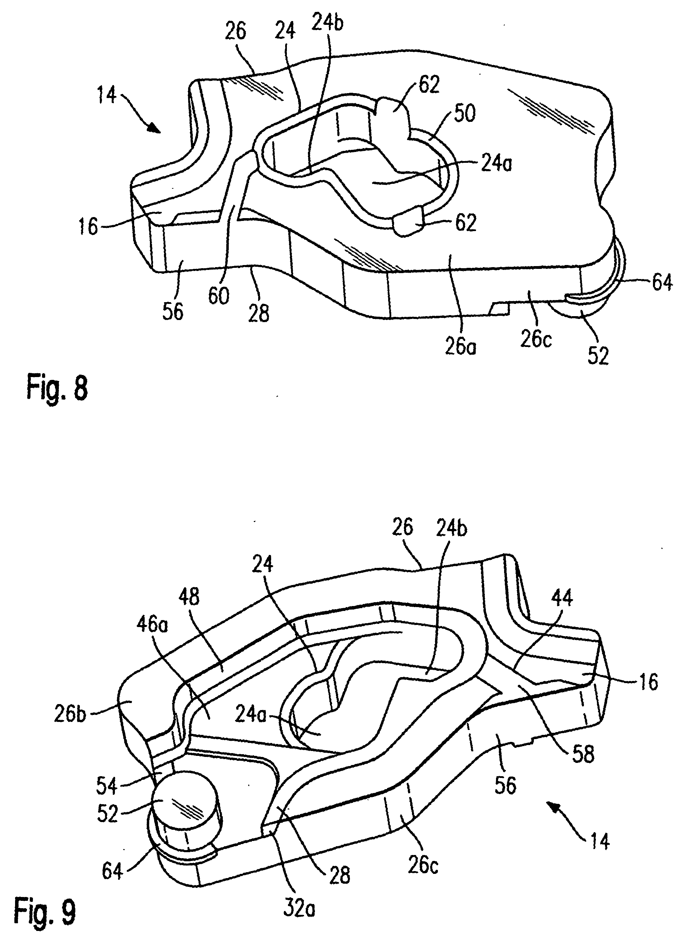

Figur 6 zeigt das erste Sperrklinkenelement 26 mit dem Sperrzahn 16, das die erste und die zweite Deckfläche 26a, 26b (siehe auch Figur 8) sowie den Rand 26c hat. Weiter ist eine Nut 44 sowie eine erste Ausnehmungsfläche 46a und eine zweite Ausnehmungsfläche 46b zu erkennen. Die erste Ausnehmungsfläche 46a ist gegenüber der Deckfläche 26b durch eine Stufe 32a versetzt, die zweite Ausnehmungsfläche 46b ist gegenüber der ersten Ausnehmungsfläche um eine Stufe 32b versetzt. Auf dem Rand 26c befindet sich im Bereich der Nut 44 eine Ausnehmung 30d. Im Bereich der zweiten Stufe 32b zwischen den beiden Ausnehmungsflächen 46a,46b hat das erste Sperrklinkenelement 26 weiter den Stift 42. Im Bereich der ersten Ausnehmungsfläche 46a befindet sich die Steuerkontur 24 mit den Aussparungen 24a und 24b.

Figur 7 zeigt das zweite Sperrklinkenelement 28 aus Kunststoff mit einem Rahmen 48, an dem der Steuerkonturrahmen 50, eine Stiftkappe 52 über einen ersten Verbindungssteg 54 und ein Klinkenrandabschnitt 56 über einen zweiten Verbindungssteg 58 und einen dritten Verbindungssteg 60 befestigt ist. Die Stiftkappe 52 ist auf der dem Betrachter abgewandten Deckflächenseite offen. Wie in Figur 8 besser zu sehen ist, sind auf der dem Rahmen 48 abgewandten Seite des Steuerkonturrahmens 50 zwei Zapfen 62 angeordnet. Weiter ist die Stiftkappe 52 an ihrem offenen Ende mit einem Steg 64 in Form eines Halbkreisbogens, beginnend am ersten Verbindungssteg 54, versehen.

Figuren 8 und 9 zeigen die Sperrklinke 14 mit dem ersten Sperrklinkenelement 26 und dem zweiten Sperrklinkenelement 28. Das zweite Sperrklinkenelement 28 ist so ausgeführt, daß es genau mit dem ersten Sperrklinkenelement 26 zusammenpaßt. So liegt der Steuerkonturrahmen 50 des zweiten Sperrklinkenelement 28 in der Steuerkontur 24 des ersten Sperrklinkenelements 26 mit den Aussparungen 24a und 24b. Der Rahmen 48 des zweiten Sperrklinkenelements 28 ist dem Verlauf der Stufe 32a des ersten Sperrklinkenelements 26 angepaßt und liegt gut an dieser an. Die Stiftkappe 52 des zweiten Sperrklinkenelements 28 ist der Form des Stifts 42 des ersten Sperrklinkenelements 26 angepaßt, so daß der Stift formschlüssig in der Stiftkappe sitzt. Die zweite Ausnehmungsfläche 46b des ersten Sperrklinkenelements 26 nimmt den ersten Verbindungssteg 54 und den Steg 64 auf, während die Nut 44 den zweiten Verbindungssteg 58 aufnimmt. Der Klinkenrandabschnitt 56 des zweiten Sperrklinkenelements 28 liegt formschlüssig in der Ausnehmung 30d des ersten Sperrklinkenelements 26.

Im folgenden soll kurz die Herstellung der Sperrklinke beschrieben werden. Nach der Herstellung des ersten Sperrklinkenelements 26 wird das zweite Sperrklinkenelement um das erste Sperrklinkenelement herumgespritzt. Die Verbindung zwischen erstem Sperrklinkenelement 26 und zweitem Sperrklinkenelement 28 wird primär durch die ringförmige Verbindung von Steuerkonturrahmen 50, drittem Verbindungssteg 60, Klinkenrandabschnitt 56 und zweitem Verbindungssteg 58, der wiederum mit dem Rahmen 48 verbunden ist, hergestellt. Um zu verhindern, daß der Steuerkonturrahmen 50 zumindest teilweise aus der Steuerkontur 24 herausgezogen werden kann, sind die Zapfen 62 so ausgeführt, daß sie das erste Sperrklinkenelement 26 auf der ersten Deckfläche 26a übergreifen (siehe Figur 8). Der Rahmen 48 und die Stiftkappe 52 verhindern weiter eine zumindest partielle laterale Verschiebung von Teilen des zweiten Sperrklinkenelements gegenüber dem ersten Sperrklinkenelement. Durch wenige und einfache Maßnahmen wird so eine gute formschlüssige Verbindung zwischen erstem und zweitem Sperrklinkenelement erreicht.

## Patentansprüche

1. Sperrklinke (14) für einen Mechanismus zur Blockierung eines Gurtaufrollers eines Sicherheitsgurts, **dadurch gekennzeichnet, daß** die Sperrklinke ein aus einem ersten Material bestehendes erstes Sperrklinkenelement (26), das den Gurtaufroller blockieren kann, und ein aus einem zweiten Material bestehendes zweites Sperrklinkenelement (28), das eine Bewegung der Sperrklinke steuern kann, umfaßt, wobei erstes und zweites Material nicht identisch sind.

2. Sperrklinke nach Anspruch 1, **dadurch gekennzeichnet, daß** das erste Sperrklinkenelement (26) aus einem Metall und das zweite Sperrklinkenelement (28) aus einem Kunststoff besteht.

3. Sperrklinke nach Anspruch 1 oder 2, **dadurch gekennzeichnet, daß** das erste Sperrklinkenelement (26) aus der Gruppe der Stanz-, Sinter- und Kaltfließpreßteile ist.

4. Sperrklinke nach einem der vorhergehenden Ansprüche, **dadurch gekennzeichnet, daß** das zweite Sperrklinkenelement (28) eine Steuerkontur (24) aufweist.

5. Sperrklinke nach Anspruch 4, **dadurch gekennzeichnet, daß** die Steuerkontur (24) aus zwei im wesentlichen rechtwinklig zueinander stehenden Aussparungen (24a,24b) aufgebaut ist.

6. Sperrklinke nach einem der vorhergehenden Ansprüche, **dadurch gekennzeichnet, daß** das erste und das zweite Sperrklinkenelement (26, 28) sandwichartig zusammengefügt sind.

7. Sperrklinke nach Anspruch 6, **dadurch gekennzeichnet, daß** das erste Sperrklinkenelement (26) Ausnehmungen (30a,b,c) und das zweite Sperrklinkenelement (28) Hakenelemente (40) aufweist und die Hakenelemente in die Ausnehmungen eingreifen, um eine Verbindung zwischen dem ersten Sperrklinkenelement und dem zweiten Sperrklinkenelement zu ermöglichen.

8. Sperrklinke nach einem der Ansprüche 6 und 7, **dadurch gekennzeichnet, daß** das erste Sperrklinkenelement (26) ein Durchgangsloch (34) und das zweite Sperrklinkenelement (28) einen Stift (42) aufweist und der Stift in das Durchgangsloch eingreift, um eine Sicherung der Verbindung zwischen dem ersten Sperrklinkenelement und dem zweiten Sperrklinkenelement gegen eine laterale Verschiebung zu ermöglichen.

9. Sperrklinke nach einem der Ansprüche 1 bis 5, **dadurch gekennzeichnet, daß** das zweite Sperrklinkenelement (28) ein Kunststoffspritzteil ist, das das erste Sperrklinkenelement (26) umschließt.

## Claims

1. A locking pawl (14) for a mechanism for blocking a belt retractor of a safety belt, **characterized in that** the locking pawl comprises a first locking pawl element (26) made of a first material, which can block the belt retractor, and a second locking pawl element (28) made of a second material, which can control a movement of the locking pawl, the first and second materials not being identical.

2. The locking pawl as claimed in claim 1, **characterized in that** the first locking pawl element (26) is made of a metal and the second locking pawl element (28) is made of a plastic material.

3. The locking pawl as claimed in claim 1 or 2, **characterized in that** the first locking pawl element (26) is one from the group including stamped, sintered and cold extruded parts.

4. The locking pawl as claimed in any of the preceding claims, **characterized in that** the second locking pawl element (28) has a control contour (24).

5. The locking pawl as claimed in claim 4, **characterized in that** the control contour (24) is constituted of two recesses (24a, 24b) disposed substantially at right angles to each other.

6. The locking pawl as claimed in any of the preceding claims, **characterized in that** the first and second locking pawl elements (26, 28) are joined in a sandwich-like manner.

7. The locking pawl as claimed in claim 6, **characterized in that** the first locking pawl element (26) has recesses (30a, b, c) and the second locking pawl element (28) has hook elements (40), and the hook elements engage in the recesses in order to allow a connection between the first locking pawl element and the second locking pawl element.

8. The locking pawl as claimed in either of claims 6 and 7, **characterized in that** the first locking pawl element (26) has a through hole (34) and the second locking pawl element (28) has a pin (42), and the pin engages in the through hole in order to allow the connection between the first locking pawl element and the second locking pawl element to be secured against a lateral displacement.

9. The locking pawl as claimed in any of claims 1 to 5, **characterized in that** the second locking pawl element (28) is an injection-molded plastic part which encloses the first locking pawl element (26).

## Revendications

1. Cliquet de verrouillage (14) pour un mécanisme de blocage d'un enrouleur de ceinture d'une ceinture de sécurité, **caractérisé en ce que** le cliquet de verrouillage comprend un premier élément de cliquet de verrouillage (26) constitué d'un premier matériau, lequel peut bloquer l'enrouleur de ceinture, et un deuxième élément de cliquet de verrouillage (28) constitué d'un deuxième matériau, lequel peut commander un mouvement du cliquet de verrouillage, les premier et deuxième matériaux n'étant pas identiques.

2. Cliquet de verrouillage selon la revendication 1, **caractérisé en ce que** le premier élément de cliquet de verrouillage (26) est en un métal, et le deuxième élément de cliquet de verrouillage (28) est en une matière plastique.

3. Cliquet de verrouillage selon la revendication 1 ou 2, **caractérisé en ce que** le premier élément de cliquet de verrouillage (26) est du groupe des pièces embouties à la presse par estampage, par frittage et par extrusion à froid.

4. Cliquet de verrouillage selon l'une des revendications précédentes, **caractérisé en ce que** le deuxième élément de cliquet de verrouillage (28) présente un contour de commande (24).

5. Cliquet de verrouillage selon la revendication 4, **caractérisé en ce que** le contour de commande (24) est constitué par deux évidements (24a, 24b) sensiblement perpendiculaires l'un à l'autre.

6. Cliquet de verrouillage selon l'une des revendications précédentes, **caractérisé en ce que** les premier et deuxième éléments de cliquet de verrouillage (26, 28) sont assemblés en sandwich.

7. Cliquet de verrouillage selon la revendication 6, **caractérisé en ce que** le premier élément de cliquet de verrouillage (26) présente des évidement (30a, b, c) et le deuxième cliquet de verrouillage (28) présente des éléments en forme de crochets (40), et les éléments en forme de crochets s'engagent dans les évidements pour permettre une liaison entre le premier élément de cliquet de verrouillage et le deuxième élément de cliquet de verrouillage.

8. Cliquet de verrouillage selon l'une des revendications 6 et 7, **caractérisé en ce que** le premier élément de cliquet de verrouillage (26) présente un alésage traversant (34) et le deuxième élément de cliquet de verrouillage (28) présente une goupille (42), et la goupille s'engage dans l'alésage traversant pour permettre une liaison sûre entre le premier élément de cliquet de verrouillage et le deuxième élément de cliquet de verrouillage, à l'encontre d'un déplacement latéral.

9. Cliquet de verrouillage selon l'une des revendications 1 à 5, **caractérisé en ce que** le deuxième élément de cliquet de verrouillage (28) est une pièce de matière plastique moulée par injection qui entoure le premier élément de cliquet de verrouillage (26).
